Europäisches Patentamt

European Patent Office

Office européen des brevets

(19)

(11) Publication number: **0 424 049 B1**

# EUROPEAN PATENT SPECIFICATION

(45) Date of publication of patent specification: **13.12.95**  (51) Int. Cl.$^6$: **C08F 4/02**

(21) Application number: **90311231.6**

(22) Date of filing: **17.10.90**

(54) **Method and equipment for the preparation of a carrier of a polymerization catalyst**

(30) Priority: **20.10.89 FI 895015**

(43) Date of publication of application:
**24.04.91 Bulletin 91/17**

(45) Publication of the grant of the patent:
**13.12.95 Bulletin 95/50**

(84) Designated Contracting States:
**AT BE CH DE DK ES FR GB GR IT LI LU NL SE**

(56) References cited:
**WO-A-87/07620**
**US-A- 4 639 356**

**CHEMICAL ABSTRACTS, vol. 105, no. 8, 1986, Columbus, Ohio, US;abstract no. 62883, H.L.BERGER: 'APPLICATION OF ULTRASONIC NOZZLE IN ENERGYRELATED SYSTEMS' page 134 ;**

(73) Proprietor: **Borealis Holding A/S**
**Lyngby Hovedgade 96**
**DK-2800 Lyngby (DK)**

(72) Inventor: **Koskinen, Jukka**
**Westendintie 105**
**SF-02160 Espoo (FI)**
Inventor: **Pentti, Ismo**
**Rinnetie 12 as 1**
**SF-06850 Kulloo (FI)**

(74) Representative: **Barlow, Roy James et al**
**J.A. KEMP & CO.**
**14, South Square**
**Gray's Inn**
**London WC1R 5LX (GB)**

## Description

The invention relates to a method of the preparation of a polymerization catalyst carrier by spraying a liquid containing a carrier through a nozzle into an inert gas so that it first forms small droplets which then solidify to small carrier particles.

Polymerization catalysts, and Ziegler-Natta-type catalysts in particular, nowadays typically comprise an inert carrier on which the actual active catalyst component or the mixture or the complex formed by the catalytic compounds is layered. The morphology and size distribution of such a carrier are of great significance for the activity of the catalyst and for the properties of the polymer obtained by the catalyst. It is in fact possible, by means of active catalysts, to produce polymers which are so pure that no catalyst residues need to be removed. On the other hand, the morphology of the carrier influences the morphology of the polymer product itself as it has been noted that the morphology of the catalyst repeats itself in the structure of the polymer (the so-called replica phenomenon). When a fluid product polymer is wanted having a preferred morphology and a narrow particulate distribution, which is desirable in view of the intended use of many processing processes, the properties of the carrier shall be made similar because of the replica phenomenon.

The Ziegler-Natta-type catalysts at present typically comprise a magnesium or silica-based carrier treated with a transition metal compound like a titanium halide and sometimes also with an electron donor compound. The knowledge also exists that the carrier can be brought to an advantageous crystal form, uniform in size, by allowing it to crystallize as a complex of any one of its crystal solvents.

Such a treatment of a carrier with a crystal solvent is presented e.g. in the US patent specification 4,071,674, in which a pro-catalyst based on a transition metal compound has been prepared by reacting a titanium or vanadium compound with a reaction product that has been produced when an adduct of a magnesium dihalide and an alcohol reacts with an organometallic compound of a metal of any of the groups I to III. The preparation of a procatalyst takes place by adding alcohol dropwise to a suspension of magnesium dihalide, after which organometallic compound is added dropwise to the reaction mixture. After agitation the preactivated carrier is activated by adding titanium tetrachloride to the reaction mixture. The adding stages of such a method are primitive and do not allow regulation of the morphology of the catalyst in the desired manner.

The treatment with a crystal solvent is also described in JP-A-59 215301. In this publication the corresponding carrier complex (10g of $MgCl_2$ and 24.2g ETOH) have been prepared by an emulsion technique. The carrier complex melt has been dispersed in n-decane to spheroidal melt particles. After this the carrier particles in the emulsion have been shock solidified by transferring the emulsion into a cold hydrocarbon medium. A drawback of this method is, among others, that such components are needed in the preparation of the carrier which are of no use at the later stages of the preparation of the catalyst, and this pre-supposes the existence of proper purification and recirculation equipments.

In a method according to EP-A-0056700 the titanium halide is reacted with a magnesium chloride catalyst carrier in the form of microspheres, after which the reaction product particles are recovered by physical means and mixed with an organometallic compound. In this method the carrier is prepared by producing a solution that contains magnesium dichloride dissolved in ethanol and subsequently spray-drying the solution by spraying it into a flow of nitrogen gas having high inlet and outlet temperatures. As a result spheroidal magnesium dichloride particles are obtained. In this method the high temperature evaporates a large part of the crystal solvent, whereby the activation capacity of the carrier decreases and the porosity increases.

WO-A-87/07620 (Neste Oy) discloses a procedure for manufacturing a solid catalyst carrier by spraying a magnesium compound or a mixture thereof in molten state through a nozzle into a chamber which has been cooled to a temperature at which the magnesium compound or its mixture will solidify. No special attention was paid to the nozzle design of the process. In WO 87/07620 the above-mentioned carrier complex formed by the carrier and the crystal solvent can be melted to a clear liquid. By conducting such a liquid through a spray-nozzle into a sprays room cooled by cold nitrogen gas it crystallizes to small particles having a spheroidal carrier complex form and being very fluent and loose. Further the carrier complex crystallizes without evaporation of the crystal solvent. Hereby, a nacreous, non-porous surface is obtained, which is particularly advantageous for the preparation of an active catalyst.

When such an activated carrier is brought into contact with titanium compounds, plenty of catalytically active complexes are formed on the surface of the carrier between the $MgCl_2$ and the titanium compound when the crystal solvent disappears.

The last-mentioned methods using the spraying technique lead to easily activated carrier compounds and complexes. A drawback in the spraying is, however, that the drops formed are not fully of uniform size.

An aim of the invention is to provide a method for the preparation of a polymerization catalyst carrier, which simultaneously leads to a maximally active catalyst and to catalyst particles of advantageous form and narrow size distribution. These goals have been achieved by a method for the preparation of a polymerization catalyst carrier characterized by the feataures disclosed in the characterizing clause of claim 1. Thus, when liquid containing a carrier is sprayed into inert gas, the spraying is carried out by feeding the liquid mentioned through an ultrasonic nozzle in which or in connection with which the liquid forms small droplets of uniform size by means of standing sonic waves in the range of ultrasonic waves. When the drops then solidify in the inert gas, they also become small carrier particles of uniform size.

Spraying through an ultrasonic nozzle enables a carrier having a preferred morphology and a narrow particle distribution to be obtained.

According to the present invention the carrier and the crystal solvent are brought into contact with each other in order to form a liquid containing a carrier. Then the carrier-containing liquid in the form of a liquid, a solvate or a melt is transformed by physical means into small droplets of as uniform a size as possible. This may take place by spray-drying or -crystallizing into gas medium or it can take place by emulsion or suspension into liquid medium. The use of ultrasound in all these methods makes the drop size distribution narrower.

According to the invention ultrasonic waves are used in the nozzle spraying carrier-containing liquid. Hereby an ultrasonic nozzle is used having a vibration frequency in the range from 10 kHz to 200 kHz, preferably of the order of of 30kHz. The vibration power is 50 W to 200 W preferably of the order of 100W.

According to an embodiment of the invention the carrier-containing liquid is sprayed from the nozzle into inert gas in the spraying room, wherein it first forms droplets and is then solidified. It is also advantageous to prepare the carrier so that the particles are formed by spray-crystallizing a mixture of the carrier and the crystal solvent to crystalline complex particles. The spray-crystallization is preferably carried out by heating the carrier solvated with a crystal solvent to a homogeneous carrier-containing liquid and then spraying the liquid by means of a hot spray gas into a cooled spraying room, where the carrier complex particles of the carrier and the crystal solvent are formed without substantial evaporation of the crystal solvent. The spray-crystallization is carried out by using gases, such as dry nitrogen, which are inert with regard to the reaction components. The carrier-containing liquid first forms droplets in the drop-forming zone of the spraying room and then arrives at the solidification zone of the spraying room filled with cold inert gas, where it solidifies. At least a portion of the spraying room can, when necessary, be cooled by means of heat exchange equipment and/or by conducting cooling inert gas and/or liquid medium into the spraying space.

If cooling liquid medium is conducted into the spraying room the carrier particles can immediately after the solidification be precipitated into said medium, whereby the sludge is preferably obtained by agitating with a mixer in the spraying room and/or by adding surface active substance.

A magnesium compound is preferably used as the carrier, more preferably magnesium dihalide and most preferably magnesium dichloride. The carrier must be anhydrous so that it will not react with titanium tetrachloride, which is susceptible to moisture. Advantageous solvents have been found to be alcohols and the most advantageous one dry (anhydrous) absolute ethanol.

Ethanol forms with magnesium dichloride a crystalline complex $MgCl_2 \cdot xaEtOH$, wherein a is 1.6, preferably 2.6 and most preferably 3.5.

The magnesium dichloride-ethanol complex is preferably fed from the ultrasonic nozzle at a temperature of 100 to 200°C, whereby it easily becomes atomized into small droplets of suitable size. The most suitable temperature is about 130°C. After the spraying it comes into contact with a cold medium flow having a temperature of -20 to +20°C and preferably -10 to +10°C. The nitrogen gas mentioned can be used as the medium, but also a light hydrocarbon, such as heptane, is suitable.

If liquid is used as the cooling medium, the finished carrier particles are obtained by separating them from this liquid.

Finally, the completed carrier particles are activated with a transition metal compound and optionally an electron donor for the preparation of the solid procatalyst of a Ziegler-Natta-catalyst.

The method of the invention can be performed using equipment comprising a nozzle and a spraying room, where there is in the nozzle, or in connection with it, a vibrator for producing standing sonic waves in the ultrasonic range by means of which the carrier-containing liquid forms small droplets of uniform size. These drops then solidify in the spraying space into small carrier particles of equal size. The spraying room can be divided into a drop forming zone, into which the carrier-containing liquid is sprayed into small droplets, and into a solidifying zone, in which the drops solidify into small carrier particles.

According to a preferred embodiment heating is arranged within the drop forming zone, which e.g. takes place automatically by means of the hot inert gas flow coming from the nozzle of the carrier-containing liquid and/or IR-radiation.

The solidification zone of the spraying room can be cooled in many ways. Between the solidification zone and the drop forming zone of the spraying room can be arranged separating means which prevent heat from transferring from the drop forming zone to the solidification zone. Heat exchange surfaces can be arranged inside the solidification zone and around it can be installed a cooling jacket. Nozzles for feeding cold inert gas and/or fluid medium into the solidifying liquid can also be arranged in the solidification zone of the spraying room.

According to one embodiment a cold medium is arranged on the floor of the spraying room, into which the settling carrier particles precipitate, preferably by means of a mixer. The carrier particles can also be emulgated in a cool medium by means of a surfaceactive substance.

Moreover, one or several aggregates and optionally one or several vessels can be arranged in connection with the equipment for separating the cooling and transport medium from the finished carrier particles.

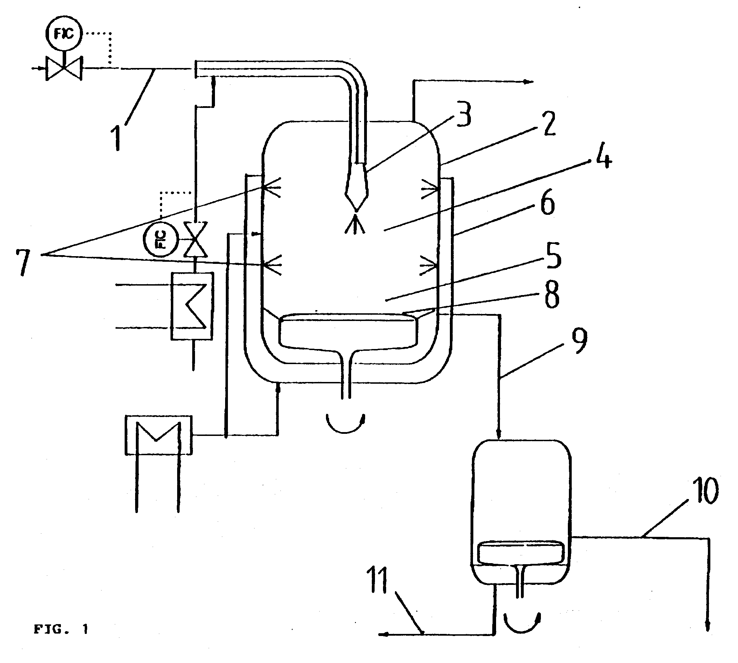

An equipment for the preparation of a carrier of a polymerization catalyst is shown in the Figure in order to illustrate the present invention.

In the Figure the carrier-containing liquid, e.g. the carrier complex 1 in melt form, is conducted to the spraying room 2 through an ultrasonic nozzle 3 wherein, owing to standing sonic waves, a drop spray is formed having a narrow drop size distribution. The drops created are blown further from the drop forming zone 4 of the spraying room 2 to its solidification zone 5 by means of hot inert gas. Also the members 3 of the nozzle for producing the ultrasonic waves, i.e. the vibration surfaces, are heated by inert gas so as to prevent the melt 1 from crystallizing already in the ultrasonic nozzle 3.

When the drop spray comes into the solidification zone of the spray room (2), the drops solidify when the temperature decreases so that also the solidified particles have a narrow size distribution.

The spraying room and preferably its solidification zone 5, can be cooled externally e.g. by circulating cold gas or liquid in the structure of the spraying room 2 or in purpose-designed cooling equipments 6. Alternatively or in addition, the cooling can be arranged by conducting cold inert gas or solvent into the spraying room 2 through nozzles 7 at the floor and/or the sides of it. When the carrier particles settle on the floor of the spraying room 2, they form a sludge with either the solvent used as cooling medium or a solvent conducted into the spraying room for the creation of a sludge. The creation of a sludge can be promoted by means of the mixer 8.

The created sludge is removed e.g. through one or several aggregates 9 in the side of the spraying room 2. The carrier particles 10 are separated from the sludge and the particles can still be sieved to desired fractions. The solvent 11 obtained from the separation can be returned to the spraying room 2 and/or as the cooling medium of its cooling jacket 6.

An essential advantage of the spraying taking place by means of an ultrasonic nozzle in comparison with conventional methods, e.g. pressure atomization or the pneumatic spraying of a melt is that:

- The amount of the inert gas fed into the nozzle, with regard to the fed melt, is small so that the solvent component of the carrier, such as ethanol, will not evaporate during the atomization. This is particularly suitable when the particles solidify by crystallization, because a small solvent concentration in a cold gas room can cause increasing agglomeration of the crystallizing melt particles and clogging of the product,
- the drops created have a small velocity, whereby no whirling currents of the gas and particles, nor colliding or mixing of the melt fog and crystallized fog, occur in the spraying room, which, too, decreases the crystallization of the particles onto each other.

An essential advantage of the ultrasonic atomizer in regard to conventional spraying equipments is its remarkably smaller size than is normal in equipment designed for the capacity concerned. Moreover, the crystallization can easily be carried out at pressures above or below atmospheric.

The prevention of the agglomeration of the particles can still be efficiently promoted by using surface active substances in the bottom of the reactor e.g. in the liquid phase formed by a hydrocarbon. The sludge formed by a hydrocarbon, preferably heptane, and a carrier provided by the method according to the invention can easily be wet screened for the particle size range desired, e.g. 20 to 70 $\mu$m.

In the following some examples are presented to illustrate the invention.

Example 1

5kg/h of $MgCl_2$ * 3.5 EtOH-complex in molten state and at a temperature of 130°C was fed into the above-described spraying equipment (V = 100 l.) furnished with an ultrasonic atomizer having at the bottom of it heptane at the temperature of 0°C. About 5kg/h of nitrogen was fed to the ultrasonic nozzle to blow the fog off the nozzle area. The temperature of the nitrogen was 130°C. The vibrating frequency was 30kHz and the vibration effect 100W. The vibrating elements were heated with a UV-radiant heater so as to prevent the crystallization of the fog on the vibrating surfaces.

The melt complex dropped and solidified into carrier particles of uniform size, which elutriated in the cold heptane at the bottom of the spraying room. The crystallized particles separated from the heptane sludge were spheroidal or had an oval form and their outer effective diameter $d_{32}$ was about 30 to 40 $\mu$m and the width of the distribution SPAN was 1.3 (SPAN = (d(90%)-d(10%))/d(50%) defined with Malvern Master Sizer particle size analysor). The chemical composition of the particles remained the same during the spray crystallization process (MgCl$_2$ * 3.5 EtOH). Agglomeration of the particles was slight.

A product sludge containing about 2kg of the catalyst carrier was screened in a multi-function reactor according to the FI-patent application No. 881538, the bottom sieve size of which was 15$\mu$m, and activation with titanium tetrachloride was carried out. The volume of the multi-function reactor was 80 liters. TiCl$_4$ having temperature of -10°C was fed to the reactor with an agitation of 100rpm. The temperature of the mixture was raised uniformly to 115°C within 3 hours and 400g of the inner donor DIBP was added when the temperature was +20°C. Agitation was still continued for 2 hours, after which the reaction solution and the catalyst were separated by fittering. After this TiCl$_4$ having a temperature of 110°C was fed to the reactor and the catalyst was washed for 2 hours, the stirring velocity being 400rpm. After this the catalyst was again separated from the washing liquor and the catalyst was washed with heptane (60 liters) four times at 80°C 2h/wash. After the wash the catalyst was dried with nitrogen having the a temperature of +70°C and the jacket of the reactor was heated to +70°C with hot oil. The drying time was 5 hours. The dried catalyst was removed from the reactor by means of vibration of nitrogen blowing. 800g of finished catalyst was obtained and the analysis result of the catalyst was: Ti 3.0% by weight, Mg 17. 8% by weight, Cl 56.4% by weight, heptane 22.3% by weight. The morphology of the catalyst remained unchanged during the activation and the wash. The sludge polymerization test of the catalyst (7 bar, 4h, 70°C) gave as the activity of the catalyst 15.6kg PP/g of catalyst. The isotactic index of the polymer was 97.1% and the bulk density of the polymer was 0.45g/cm$^3$. The particle size distribution of the polymer particles was narrow.

Example 2

As example 1, but the composition of the atomized melt was MgCl$_2$ * 4.5 EtOH.

Example 3

As example 1, but the composition of the atomized melt was MgCl$_2$ * 3.5 EtOH 0.1 DIBP and in the activation stage no DIBP was added any more.

Example 4

MgCl$_2$ * 3.5 EtOH complex was atomized with an ultrasonic atomizer at a temperature of 130°C into a spray chamber delivered by Niro Atomizer. Melt was sprayed from the upper portion of the chamber into a cold (-5°C) nitrogen flow. The drops were removed from the nozzle with a hot (130°C) nitrogen flow. The drop forming zone was isolated with a shield from the solidification zone used by the nitrogen flow so that the cold nitrogen would not crystallize melt on the vibrating surfaces of the ultrasonic atomizer.

The drops crystallized when they settled 3 meters in the cold nitrogen flow of the solidification zone. The spray crystallized spheroidal catalyst carrier particles were separated from the nitrogen flow by means of a cyclone. The spraying process was continuously working and 100kg of the product was collected through the cyclone in 6 hours. The particles formed were freely flowable and no agglomeration occurred. The average particle size of the product was $d_{32}$ = 40 to 50$\mu$m and the width of the particle size distribution was narrow, SPAN = 1.4 to 1.7. The chemical composition of the particles formed was the same as that of the carrier melt fed.

80kg of the material in question (MgCl$_2$ * 3.5 EtOH) was activated, washed, and dried in a multifunction reactor delivered by Schenk Filterbau GMBH. The reactor was turnable and its one end was furnished for the screen wash and the other end for the activation and the drying phase. The volume of the reactor was 1.5m$^3$.

80kg of spray-crystallized catalyst carrier was dosed into a nitrogenised reactor. 1000 liters of TiCl$_4$ cooled to a temperature of 10°C was added to the reactor. The temperature was held at -10°C for the whole time of adding after which the mixture was agitated for 1 hour with the agitation rate 30rpm. The temperature of the reaction mixture was raised to +20°C within 1 hour, after which 18 liters of inner donor DIBP was added. After this the temperature was raised to +115°C within 3 hours and the mixture was held at this temperature for 2 hours, after which the reaction solution was filtered through a screen. The screen type was metal sinter having a screen size 20$\mu$m. After the filtration 1000 liters of preheated TiCl$_4$ having a temperature +90°C was added to the reactor. The temperature was raised to +110°C and was kept there for 2 hours with the agitation 30rpm, after which the solution was filtered away. The catalyst was washed with 1000 liters of heptane four times at a temperature of +90°C. The washing time was 30 min./washing occasion. The catalyst produced was dried in the reactor by turning it around to a drying position at a temperature of +60°C for 6 hours. The hydrochloric gases created in the activation were conducted from the reactor through an oil lock into the gas washer.

The size and the morphology of the catalyst remained the same during the whole activation and wash. 40kg of finished catalyst was obtained and the analysis result of the catalyst was: Ti 2.1% by weight, Mg 16.1% by weight, Cl 54.1% by weight. The sludge polymerization test of the catalyst (7 bar, 4 h, 70°C) gave 14.8kg of PP/g of catalyst as the activity of the catalyst. The isotactic index of the polymer was 96.0% and the bulk density of the polymer was 0.45g/cm$^3$. The particle size distribution of the polymer particles was narrow.

**Claims**

1. Method for preparing a polymerization catalyst carrier by spraying a liquid containing a carrier through a nozzle into inert gas so that it first forms small droplets, which then solidify to small carrier particles, characterized in that the spraying is carried out by feeding the liquid containing a carrier through an ultrasonic nozzle in which or in connection with which, by means of standing sonic waves in the ultrasonic range, said liquid forms small droplets of uniform size which then solidify to small carrier particles of equally uniform size; and in that the vibration frequency is in the range from 10 kHz to 200 kHz and the vibration power is 50 W to 200 W.

2. Method according to claim 1, characterized in that the vibration frequency is of the order of 30 kHz, and the vibration power is of the order of 100 W.

3. Method according to claim 1 or 2, characterized in that the liquid containing a carrier is sprayed through a nozzle into inert gas in a spraying room, wherein it first forms droplets and then solidifies.

4. Method according to claim 3, characterized in that the liquid containing a carrier is first sprayed from the nozzle by means of hot inert gas into the drop forming zone of the spraying room, where it forms droplets, and is then conducted into a solidifying zone of the spraying room filled with cold inert gas, where it solidifies.

5. Method according to claim 3 or 4, characterized in that at least a portion of the spraying room is cooled by means of heat exchange equipment and/or by conducting cooling inert gas and/or liquid medium into the spraying room.

6. Method according to Claim 5, **characterized** in that the carrier particles are removed from the spraying room sludged in the cooling medium, wherein advantageously the sludge is obtained by mixing the carrier particles and the cooling medium by means of a mixer in the spraying room and/or by adding surfaceactive medium.

7. Method according to any one of the preceding Claims, **characterized** in that it is carried out as spray-crystallization so that the warm melt acting as the carrier containing liquid is at least partly crystallized by conducting it into said inert gas which has been cooled.

8. Method according to any one of the preceding Claims, **characterized** in that a substantially homogeneous melt of magnesium dihalide, preferably $MgCl_2$, and a crystal solvent, preferably $C_2H_5OH$, is used as the carrier-containing liquid.

9. Method according to any one of the preceding Claims, **characterized** in that the finished carrier particles are activated with a transition metal compound, and optionally an electron donor, to prepare a solid procatalyst component of the Ziegler-Natta-catalyst.

**Patentansprüche**

1. Verfahren zur Herstellung eines Polymerisationskatalysatorträgers durch Sprühen einer Flüssigkeit, die einen Träger enthält, durch eine Düse in ein inertes Gas, sodaß sie zunächst kleine Tröpfchen bildet, die sich dann zu kleinen Trägerpartikeln verfestigen,
   **dadurch gekennzeichnet,**
   daß das Sprühen durchgeführt wird, indem die Flüssigkeit, die einen Träger enthält, durch eine Ultraschall-Düse zugeführt wird, in der oder in Verbindung mit der mittels stehender Schallwellen im Ultraschallbereich die Flüssigkeit kleine Tröpfchen gleichmäßiger Größe bildet, die sich dann zu kleinen Trägerpartikeln der gleichen gleichmäßigen Größe verfestigen; und, daß die Schwingungsfrequenz in einem Bereich von 10 kHz bis 200 kHz und die Schwingungsleistung 50 W bis 200 W ist.

**2.** Verfahren nach Anspruch 1, dadurch gekennzeichnet, daß die Schwingungsfrequenz in der Größenordnung von 30 kHz und die Schwingungsleistung in der Größenordnung von 100 W ist.

**3.** Verfahren nach Anspruch 1 oder 2, dadurch gekennzeichnet, daß die einen Träger enthaltende Flüssigkeit durch eine Düse in ein inertes Gas in einem Sprühraum gesprüht wird, worin sie zunächst Tröpfchen bildet und sich dann verfestigt.

**4.** Verfahren nach Anspruch 3, dadurch gekennzeichnet, daß die einen Träger enthaltende Flüssigkeit erst mittels eines heißen inerten Gases von der Düse in die Tropfen-bildende Zone des Sprühraumes gesprüht wird, wo sie Tröpfchen bildet, und dann in eine Erstarrungszone der Sprühraumes geleitet wird, die mit kaltem inerten Gas gefüllt ist, wo sie sich verfestigt.

**5.** Verfahren nach Anspruch 3 oder 4, dadurch gekennzeichnet, daß mindestens ein Teil des Sprühraumes mittels einer Wärmeaustauschausrüstung und/oder durch Einleiten eines inerten Kühlgases und/oder eines flüssigen Kühlmediums in den Sprühraum gekühlt wird.

**6.** Verfahren nach Anspruch 5, dadurch gekennzeichnet, daß die Trägerpartikel aus dem Sprühraum, eingeschlämmt in dem Kühlmedium, entfernt werden, wobei der Schlamm vorteilhafterweise durch Mischen der Trägerpartikel und des Kühlmediums mittels eines Mischers im Sprühraum und/oder durch Zugeben eines Oberflächenaktiven Mediums erhalten wird.

**7.** Verfahren nach einem der vorhergehenden Ansprüche, dadurch gekennzeichnet, daß es als Sprüh-Kristallisation durchgeführt wird, sodaß die warme Schmelze, die als die den Träger enthaltende Flüssigkeit wirkt, zumindest teilweise kristallisiert, indem sie in das inerte Gas, das gekühlt worden ist, eingeleitet wird.

**8.** Verfahren nach einem der vorhergehenden Ansprüche, dadurch gekennzeichnet, daß eine im Wesentlichen homogene Schmelze eines Magnesiumdihalogenids, vorzugsweise MgCl$_2$, und eines Kristall-Lösungsmittels, vorzugsweise C$_2$H$_5$OH, als die Träger-haltige Flüssigkeit verwendet wird.

**9.** Verfahren nach einem der vorhergehenden Ansprüche, dadurch gekennzeichnet, daß die fertigen Trägerpartikel mit einer Übergangsmetall-Verbindung, und wahlweise einem Elektronendonor, aktiviert werden, um einen festen Prokatalysator-Bestandteil des Ziegler-Natta-Katalysators herzustellen.

**Revendications**

**1.** Procédé pour préparer d'un support de catalyseur de polymérisation en pulvérisant un liquide contenant un support par l'intermédiaire d'une buse dans un gaz inerte de manière à former de petites gouttelettes qui se solidifient ensuite en petites particules porteuses, caractérisé en ce que la pulvérisation est effectuée en délivrant le liquide contenant un support au travers d'une buse ultrasonique dans laquelle ou en relation avec laquelle, au moyen d'ondes soniques stationnaires dans la plage ultrasonique, ledit liquide forme de petites gouttelettes de dimension uniforme qui se solidifient ensuite en petites particules porteuses de dimension également uniforme ; et en ce que la fréquence de vibration se trouve dans la plage de 10 KHz à 200 KHz et la puissance de vibration est comprise entre 50 W et 200 W.

**2.** Procédé selon la revendication 1, caractérisé en ce que la fréquence de vibration est de l'ordre de 30 kHz, et la puissance de vibration est de l'ordre de 100 W.

**3.** Procédé selon la revendication 1 ou 2, caractérisé en ce que le liquide contenant un support est pulvérisé au travers d'une buse dans un gaz inerte dans une chambre de pulvérisation, dans laquelle il forme d'abord des gouttelettes et ensuite se solidifie.

**4.** Procédé selon la revendication 3, caractérisé en ce que le liquide contenant un support est d'abord pulvérisé de la buse au moyen d'un gaz inerte chaud dans la zone formant des gouttes de la chambre de pulvérisation, où il forme des gouttelettes, et est ensuite conduit dans une zone de solidification de la chambre de pulvérisation remplie de gaz inerte froid, où il se solidifie.

**5.** Procédé selon la revendication 3 ou 4, caractérisé en qu'au moins une partie de la chambre de pulvérisation est refroidie au moyen d'un équipement d'échange de chaleur et/ou en acheminant un gaz inerte de refroidissement et/ou un fluide liquide dans la chambre de pulvérisation.

**6.** Procédé selon la revendication 5, caractérisé en ce que les particules porteuses sont extraites de la chambre de pulvérisation sous forme de boue dans le fluide de refroidissement, la boue étant avantageusement obtenue en mélangeant les particules porteuses et le fluide de refroidissement au moyen d'un mélangeur dans la chambre de pulvérisation et/ou en ajoutant un agent tensio actif.

**7.** Procédé selon l'une quelconque des revendications précédentes, caractérisé en ce qu'il est mis en oeuvre en tant que cristallisation par pulvérisation de sorte que la masse en fusion chaude agissant en tant que liquide contenant le support est au moins partiellement cristallisée en l'amenant dans ledit gaz inerte qui a été refroidi.

**8.** Procédé selon l'une quelconque des revendications précédentes, caractérisé en ce qu'une masse en fusion sensiblement homogène de dihalogénure de magnésium, de préférence MgCl2, et d'un solvant cristallin, de préférence du C2H5OH, est utilisée en tant que liquide contenant un support.

**9.** Procédé selon l'une quelconque des revendications précédentes, caractérisé en ce que les particules porteuses finales sont activées avec un composé d'un métal de transition, et facultativement un donneur d'électrons, pour préparer un composant procatalyseur solide du catalyseur Ziegler-Natta.

FIG. 1